# EUROPEAN PATENT SPECIFICATION

(11) **EP 4 184 967 B1**
(45) Date of publication and mention of the grant of the patent: **21.10.2026**
(21) Application number: 20944924.8
(22) Date of filing: 14.07.2020
(51) Int. Cl.: H04W 4/70, H04W 4/02, G01S 5/02, H04L 5/00, H04W 72/044, H04W 72/23, H04W 72/25, H04W 72/54

(54) **RELATIVE POSITIONING METHOD, TERMINAL, BASE STATION, COMMUNICATION DEVICE, AND STORAGE MEDIUM**
VERFAHREN ZUR RELATIVEN POSITIONIERUNG, ENDGERÄT, BASISSTATION, KOMMUNIKATIONSVORRICHTUNG UND SPEICHERMEDIUM
PROCÉDÉ DE POSITIONNEMENT RELATIF, TERMINAL, STATION DE BASE, DISPOSITIF DE COMMUNICATION ET SUPPORT DE STOCKAGE

(43) Date of publication of application: 24.05.2023
(73) Proprietor: Beijing Xiaomi Mobile Software Co., Ltd., Beijing 100085 (CN)
(72) Inventor: YANG, Xing, Beijing 100085 (CN)
(74) Representative: dompatent
(86) International application number: PCT/CN2020/101953
(87) International publication number: WO 2022/011565

(56) References cited:
- EP-A1- 3 694 275
- WO-A1-2019/093791
- WO-A1-2019/093794
- WO-A1-2019/192325
- CN-A- 111 132 307
- CN-A- 111 277 385
- CN-A- 111 294 773
- CN-A- 111 314 952
- CN-A- 111 386 740
- US-A1- 2020 296 614
- NOKIA, NOKIA SHANGHAI BELL: "Network Based Monitoring and Reporting of QoS parameters for NR V2X Sidelink", 3GPP DRAFT; R2-1913150 NETWORK BASED MONITORING AND REPORTING OF QOS PARAMETERS FOR NR V2X SIDELINK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Chongqing, China; 20191014 - 20191018, 3 October 2019 (2019-10-03), Mobile Competence Centre ; 650, route des Lucioles ; F-06921 Sophia-Antipolis Cedex ; France , XP051791166

## Description

### TECHNICAL FIELD

The disclosure relates to the field of wireless communication technology but is not limited to the field of wireless communication technology, and provides a relative positioning method, and a communication device.

### BACKGROUND

With the development of the terminal positioning technology, the relative positioning between terminals brings users a good experience in many occasions. For example, in a large parking lot, a vehicle owner can quickly locate its vehicle on its cell phone by positioning between the cell phone and the vehicle. To support a direct communication between terminals, the sidelink wireless communication is introduced, in which an interface between the terminals is PC-5.

In the related art, when the sidelink wireless communication is performed, the resource for communication can be multiplexed, and thus severe interference between transmission channels may occur sometimes, which may affect data transmission and cause inaccurate relative positioning.

WO 2019/093794 A1 and US 2020/296614 A1 provide a distance measurement method of user equipment in a wireless communication system is provided. The method comprises receiving a plurality of ranging request signals and transmitting a plurality of ranging response signals for the plurality of ranging request signals, wherein the number of transmitted ranging response signals is less than or equal to a maximum response signal number, and the maximum response signal number is determined on the basis of a channel busy ratio (CBR) measured by the terminal.

WO 2019/093791 A1 and EP 3 694 275 A1 provide a method by which first vehicle-to-X (V2X) user equipment (UE) for supporting distance measurement transmits a ranging response signal in a wireless communication system, the method comprising: receiving a ranging request signal from second V2X UE; and transmitting, to the second V2X UE, the ranging response signal as a response to the ranging request signal on the basis of distance measurement parameter information, wherein the distance measurement parameter information includes information on a cyclic prefix (CP) length used for the ranging response signal, and the CP length used for the ranging response signal is different from a CP length to be used in V2X data channel transmission.

### SUMMARY

The invention is set out in the appended set of claims.

According to the embodiments, the measurement configuration information is sent, in which the resource selection scheme for the first terminal to measure the relative position between the first terminal and the second terminal is determined based on the measurement configuration information. In this way, the first terminal can determine the resource selection scheme based on the measurement configuration information, and measure the relative position between the first terminal and the second terminal based on the resource selection scheme determined based on the measurement configuration information sent by the base station, and thus the resource selection scheme is determined more flexibly. Compared to the fixed resource selection scheme for measuring the relative position between the first terminal and the second terminal, the first terminal can determine the resource selection scheme matching a current channel condition based on the measurement configuration information and the current channel condition for the wireless transmission, which can reduce the interference between channels caused by multiplexing the resource and improve the reliability of data transmission, thereby improving the accuracy of the relative positioning.

### BRIEF DESCRIPTION OF THE DRAWINGS

FIG. 1 is a schematic diagram of a wireless communication system.
FIG. 2 is a flowchart of a relative positioning method according to an embodiment.
FIG. 3 is a schematic diagram of a relative positioning according to an embodiment.
FIG. 4 is a flowchart of a relative positioning method according to an embodiment.
FIG. 5 is a flowchart of a relative positioning method according to an embodiment.
FIG. 6 is a flowchart of a relative positioning method according to an embodiment.
FIG. 7 is a flowchart of a relative positioning method according to an embodiment.
FIG. 8 is a flowchart of a relative positioning method according to an embodiment.
FIG. 9 is a flowchart of a relative positioning method according to an embodiment.
FIG. 10 is a flowchart of a relative positioning method according to an embodiment.
FIG. 11 is a flowchart of a relative positioning method according to an embodiment.
FIG. 12 is a schematic diagram of a base station according to an embodiment.
FIG. 13 is a schematic diagram of a terminal according to an embodiment.
FIG. 14 is a block diagram of a base station according to an embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the disclosure. The singular forms of "a" and "the" used in the disclosure and appended claims are also intended to include plural forms, unless the context clearly indicates other meanings. It should also be understood that the term "and/or" as used herein refers to and includes any or all possible combinations of one or more associated listed items.

It should be understood that although the terms "first", "second", and "third" may be used in this disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein can be interpreted as "when", "while" or "in response to determining".

For the purpose of simplicity and ease of understanding, the terms "greater than" and "less than" are used in this disclosure to characterize a size relation. However, for those skilled in the art, it can be understood that the term "greater than" covers the meaning of "greater than or equal to" and the term "less than" covers the meaning of "less than or equal to".

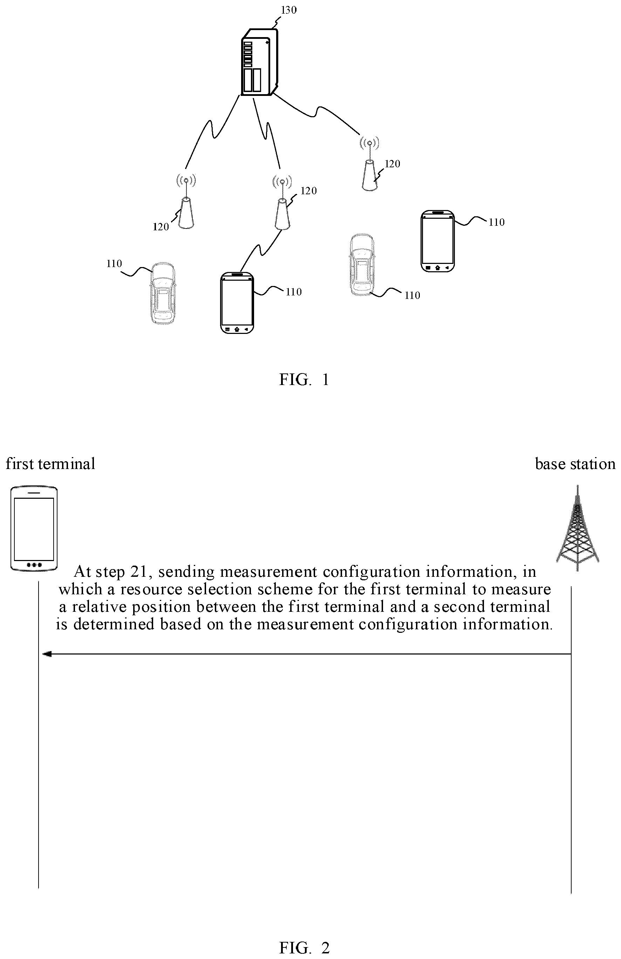

FIG. 1 is a schematic diagram of a wireless communication system. As shown in FIG. 1, the wireless communication system is a communication system based on the cellular mobile communication technology, and the wireless communication system may include: a plurality of UEs 110 and a plurality of base stations 120.

The UE 110 may be a device that provides voice and/or data connectivity to a user. The UE 110 may communicate with one or more core networks via a Radio Access Network (RAN). The UE 110 may be an Internet of Things (IoT) UE, such as a sensor device, a mobile phone (or "cellular" phone) and a computer with the IoT UE. The UE 110 may be a fixed, portable, pocket, hand-held, built-in computer or a vehicle-mounted device, such as, a Station (STA), a subscriber unit, a subscriber station, a mobile station, a mobile, a remote station, an access point, a remote terminal, an access terminal, a user terminal, a user agent, a user device, or a UE. Alternatively, the UE 110 may also be an Unmanned Aerial Vehicle (UAV) device. Alternatively, the UE 110 may also be a vehicle-mounted device, such as, an Engine Control Unit (ECU) with a wireless communication function, and a wireless communication device connected to the ECU. Alternatively, the UE 110 may also be a roadside device, such as, a street light, a signal light, or other roadside devices with a wireless communication function.

The base station 120 may be a network-side device in a wireless communication system. The wireless communication system may be the 4th generation (4G) mobile communication system, also known as a Long Term Evolution (LTE) system. Alternatively, the wireless communication system may also be the 5th generation (5G) mobile communication system, also known as a New Radio (NR) system or 5G NR system. Alternatively, the wireless communication system may also be a next-generation system of the 5G system. The access network in the 5G system may be called New Generation-Radio Access Network (NG-RAN).

The base station 120 may be an evolved base station (eNB) in the 4G system. Alternatively, the base station 120 may also be a base station (gNB) that adopts a centralized distributed architecture in the 5G system. When the base station 120 adopts a centralized distributed architecture, it generally includes a Central Unit (CU) and at least two Distributed Units (DUs). The CU is provided with protocol stacks of a Packet Data Convergence Protocol (PDCP) layer, a Radio Link Control (RLC) layer, and a Media Access Control (MAC) layer. A physical (PHY) layer protocol stack is set in the DU, and the specific implementation manner of the base station 120 is not limited in this embodiment of the disclosure.

A wireless connection can be established between the base station 120 and the terminal 110 through a radio interface. In different embodiments, the radio interface is a radio interface based on the 4G standard. Alternatively, the radio interface is a radio interface based on the 5G standard, such as, a NR. Alternatively, the radio interface may also be a radio interface based on a next generation of the 5G standard.

In some embodiments, an End to End (E2E) connection may also be established between the terminals 11, for example, scenes of vehicle to vehicle (V2V) communication, Vehicle to Infrastructure (V2I) communication and Vehicle to Pedestrian (V2P) communication in a Vehicle to everything (V2X) communication.

The above UE can be considered as the terminal device of the following embodiments.

In some embodiments, the above wireless communication system may also include a network management device 130.

A plurality of the base stations 120 are connected to the network management device 130 respectively. The network management device 130 may be a core network device in the wireless communication system. For example, the network management device 130 may be a Mobility Management Entity (MME) in an Evolved Packet Core (EPC). Alternatively, the network management device may also be other core network devices, such as a Serving GateWay (SGW), a Public Data Network GateWay (PGW), a Policy and Charging Rules Function (PCRF) or a Home Subscriber Server (HSS). The implementation form of the network management device 130 is not limited in this embodiment of the disclosure.

To facilitate the understanding of any embodiment of the disclosure, the relative positioning between the terminals is described firstly.

There are two modes to allocate the resource when transmitting data on a sidelink. The first mode is network dynamic scheduling, and the second mode is using the terminal to randomly select a resource in a positioning resource pool broadcasted by the network. In the first mode, the network dynamically allocates the resource for transmitting on the sidelink to the terminal based on the report of the terminal. In the second mode, the terminal randomly selects the resource for transmitting from a positioning resource pool broadcasted by the network or a pre-configured positioning resource pool. For the network dynamic scheduling mode, the resource is uniformly allocated by the base station. In this way, the resource can be scheduled based on a scheduling algorithm, which can reduce the interference between different terminals caused by the resource collision.

In an embodiment, when the relative positioning between terminals is performed, the sidelink is used for the wireless communication. In the sidelink wireless communication, when the terminal randomly selects the communication resource, the resource collision caused by multiplexing the resource may occur when multiple terminals use the resource for the sidelink communication at the same time, and thus signal interference between transmission channels may occur, which may affect the data transmission and finally cause inaccurate relative positioning. To address the above resource collision problem, a backoff mechanism can be introduced, to reduce the occurrence of this kind of situation. The backoff mechanism includes resource reservation, resource reservation awareness and Listen Before Talk (LBT).

In an embodiment, when performing the relative positioning between terminals, a start terminal sends an initial ranging signal to a feedback terminal, and after the initial ranging signal is received, a feedback terminal sends a feedback ranging signal to the start terminal. Upon reception of the feedback ranging signal, the start terminal calculates a relative distance between the two terminals based on a time difference between a sending time of the initial ranging signal and a receiving time of the feedback ranging signal. The terminal can calculate a relative angle by measuring an Angle of Arrival (AOA) of the ranging signal. The relative positioning between terminals is performed based on the relative distance and the relative angle.

Since the resource used for the sidelink communication are operators' licensed frequencies, the resource will be multiplexed, and thus the network needs to be able to control the terminals to use the resource in order, to reduce the interference between channels during the wireless communication.

FIG. 2 is a flowchart of a relative positioning method according to an embodiment. The method is applied in a base station, and the method includes the following steps.

At step 21, measurement configuration information is sent.

A resource selection scheme for a first terminal to measure a relative position between the first terminal and a second terminal is determined based on the measurement configuration information.

The first terminal and the second terminal may be, but are not limited to, cell phones, wearable devices, vehicle-mounted terminals, Road Side Units (RSUs), smart home terminals, industrial sensing devices and/or medical devices.

The base station is an interface device for the terminal to access the network. The base station can be various types of base stations, such as, a base station for the 3th Generation (3G) mobile communication network, a base station for the 4th Generation (4G) mobile communication network, a base station for the 5th Generation (5G) mobile communication network, or other evolved base stations.

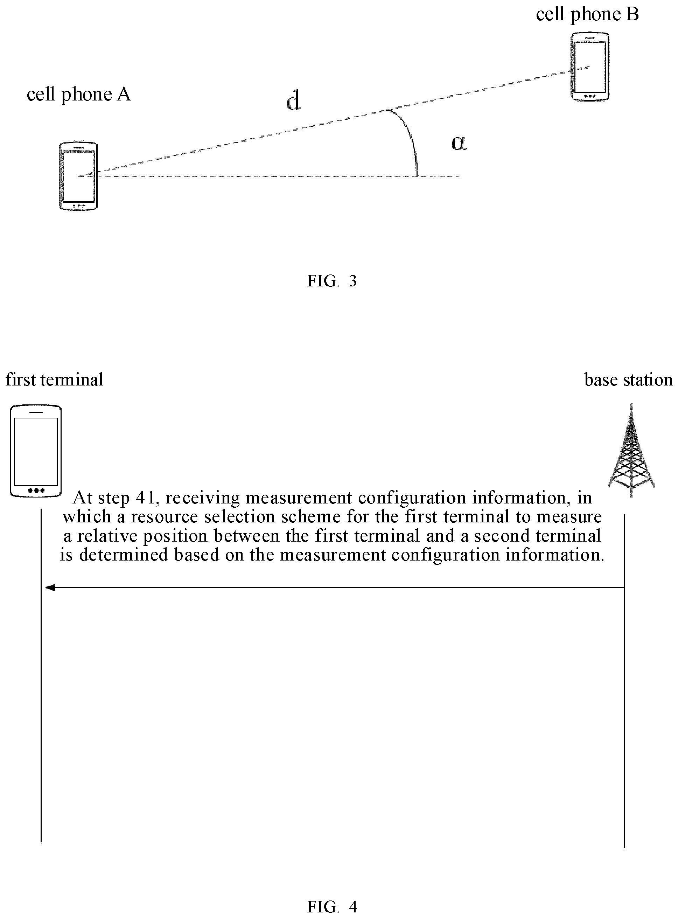

In an embodiment, measuring the relative position between the first terminal and the second terminal may be measuring a distance between the first terminal and the second terminal and/or an AOA of the second terminal relative to the first terminal. For example, as shown in FIG. 3, measuring the relative position between cell phone A and cell phone B may be measuring a distance d between the cell phone A and the cell phone B and a relative angle α of the cell phone B relative to the cell phone A.

In an embodiment, the sidelink wireless communication is used to measure the relative position between the first terminal and the second terminal.

In an embodiment, as shown in FIG. 3, the first terminal is terminal A and the second terminal is terminal B. When performing the relative positioning between the terminal A and the terminal B, during the sidelink wireless communication, the start terminal A initiates an initial ranging signal to the feedback terminal B, and after the initial ranging signal is received, the feedback terminal B sends a feedback ranging signal to the start terminal A. The start terminal A calculates a relative distance d between the terminal A and the terminal B based on a time difference between a sending time of the initial ranging signal and a receiving time of the feedback ranging signal, and the terminal A calculates a relative angle α by measuring the AOA of the feedback ranging signal, and the relative positioning between the terminal A and the terminal B is performed based on the relative distance d and the relative angle α. The relative position between the first terminal A and the second terminal B is determined.

In an embodiment, when the first terminal and the second terminal need to carry out the sidelink wireless communication to realize the relative positioning, the resource for carrying out the sidelink wireless communication can be obtained by the first terminal by sending a resource acquisition request to the base station. The base station can carry out a unified resource scheduling in response to resource acquisition requests of different terminals, and allocate different resources to different terminals, which can reduce the interference of the wireless communication when the different terminals use the same resource at the same time and ensure the accuracy of the relative positioning.

In an embodiment, the base station may broadcast a positioning resource pool to the terminal, and the terminal may randomly select a resource in the positioning resource pool broadcasted by the network for the sidelink wireless communication, to realize the relative positioning. In another embodiment, the positioning resource pool can be pre-configured, and the terminal can randomly select a resource in the pre-configured positioning resource pool for the sidelink wireless communication, to realize the relative positioning.

In an embodiment, in order to reduce the resource collision when the terminals randomly select the resource for the sidelink wireless communication, the backoff mechanism can be started. The backoff mechanism includes resource reservation, resource reservation awareness and LBT.

In an embodiment, the first terminal uses the resource randomly selected from the positioning resource pool firstly for the sidelink wireless communication for the relative positioning. When a channel quality of the sidelink wireless communication using the resource randomly selected from the positioning resource pool by the first terminal is less than a preset threshold value, the first terminal sends an acquisition request for the sidelink wireless communication resource for the relative positioning to the base station. After receiving the acquisition request, the base station schedules resource based on a scheduling instruction in response to the acquisition request, so that the first terminal can measure the relative position by the sidelink wireless communication mode. Since the resource is scheduled uniformly, the base station can schedule the resource based on a unified resource scheduling algorithm, which can reduce the interference between different terminals caused by the resource collision during the sidelink wireless communication, improve the channel communication quality, and ensure the accuracy of the relative positioning.

In an embodiment, in response to a Radio Resource Control (RRC) connection between the first terminal and the base station, when a sidelink wireless communication between the first terminal and the second terminal is performed, the base station schedules the resource for the sidelink wireless communication. In this way, since the resource is scheduled uniformly, the base station can timely reduce the interference between transmission channels caused by the resource collision between different terminals during the sidelink wireless communication for relative positioning, and thus the channel communication quality is improved and the accuracy of the relative positioning can be guaranteed.

In an embodiment, in the areas with a low deployment density of base stations (e.g., mountains, oceans), the resource used by the terminal for the sidelink wireless communication for relative positioning is selected from the pre-configured positioning resource pool. In this way, the sidelink communication is possible even when there is no resource scheduled by the base station for the sidelink wireless communication.

In an embodiment, the base station sends the measurement configuration information by a broadcast message. Alternatively, the base station sends the measurement configuration information by a RRC reconfiguration message. Therefore, the measurement configuration information is sent by the existing broadcast message or the RRC reconfiguration message, which improves the signaling compatibility of the broadcast message or the RRC reconfiguration message.

In an embodiment, in response to an acquisition request for the configuration information from the first terminal, the base station sends the measurement configuration information to the first terminal in response to the acquisition request.

In an embodiment, when an application for the relative positioning is started, the first terminal sends the acquisition request for the configuration information to the base station, and upon reception of the acquisition request, the base station sends the measurement configuration information to the first terminal in response to the acquisition request.

In an embodiment, when it is detected that the channel quality of the sidelink for the relative positioning is less than the preset threshold value, the first terminal sends the acquisition request for the configuration information to the base station, and upon reception of the acquisition request, the base station sends the measurement configuration information to the first terminal in response to the acquisition request.

In an embodiment, in response to a RRC connection between the first terminal and the base station, the base station sends the measurement configuration information to the first terminal. In this way, the first terminal can obtain the resource selection scheme for measuring the relative position between the first terminal and the second terminal by the sidelink wireless communication mode in time.

As to the resource selection scheme, the resource for the sidelink wireless communication may be randomly selected from the preset positioning resource pool for measuring the relative position. Alternatively, the resource for the sidelink wireless communication is scheduled base on the scheduling instruction for measuring the relative position.

In an embodiment, the base station can configure the resource selection scheme for measuring the relative position based on the measurement configuration information that the first terminal randomly selects the resource for the sidelink wireless communication from the preset positioning resource pool.

In an embodiment, the base station can configure the resource selection scheme for measuring the relative position based on the measurement configuration information that the first terminal uses the resource for the sidelink wireless communication scheduled by the base station.

In an embodiment, the measurement configuration information includes:
a type parameter of a reference signal; and
a threshold value of a signal strength of the reference signal associated with the resource selection scheme.

In an embodiment, the resource selection scheme is determined by the first terminal based on a relation between the signal strength of the reference signal measured and the threshold value.

A type indicated by the type parameter includes at least one of:
a downlink reference signal of a base station; and
a reference signal for a sidelink communication between the first terminal and a third terminal.

The downlink reference signal of the base station may include a Synchronization Signal and PBCH block (SSB) reference signal and a Channel-State Information Reference Signal (CSI-RS).

The RS for the sidelink communication between the first terminal and the third terminal may include a signal on a sidelink broadcast channel of the PHY layer, a Demodulation Reference Signal (DMRS) and a CSI-RS.

In an embodiment, since the downlink RS of the base station is transmitted on the communication link between the base station and the terminal, and the RS between terminals is transmitted on the sidelink, the RS can be divided into at least two types according to the types of the transmission link.

In another embodiment, the RS can be divided into different types based on a sequence corresponding to the RS. For example, a RS using a synchronization sequence and a DMRS using a demodulation reference sequence belong to different types of RSs.

In an embodiment, the measurement configuration information further includes: a measurement type of the signal strength of the RS.

The measurement types include one of: a RS Receiving Power (RSRP), a RS Receiving Quality (RSRQ), and a Channel Quality Indicator (CQI).

In an embodiment, the measurement configuration information includes a first threshold value and a second threshold value. In response to a signal strength of the downlink RS of the base station measured based on the measurement configuration information being less than the first threshold value and a signal strength of the RS for the sidelink communication between the first terminal and the third terminal being less than the second threshold value, a resource for measuring the relative position between the first terminal and the second terminal is determined from the preset positioning resource pool. Since the signal strength of the downlink RS of the base station measured based on the measurement configuration information is less than the first threshold value and the signal strength of the RS for the sidelink communication between the first terminal and the third terminal is less than the second threshold value, the first terminal may be less interfered when randomly selecting the resource for the sidelink communication. The first terminal obtains the resource for measuring the relative position between the first terminal and the second terminal from the preset positioning resource pool, which has less delay compared to obtaining the resource based on the acquisition request, and can reduce the resource collision and ensure the accuracy of the relative positioning.

In an embodiment, in response to the signal strength of the downlink RS of the base station measured based on the measurement configuration information being greater than the first threshold value or the signal strength of the RS for the sidelink communication between the first terminal and the third terminal being greater than the second threshold value, the resource for measuring the relative position between the first terminal and the second terminal scheduled by the base station based on the scheduling instruction is determined. Alternatively, in response to the signal strength of the downlink RS of the base station measured based on the measurement configuration information being greater than the first threshold value or the signal strength of the RS for the sidelink communication between the first terminal and the third terminal being greater than the second threshold value, the backoff mechanism is started and the resource for measuring the relative position between the first terminal and the second terminal is determined from the preset positioning resource pool.

In response to the signal strength of the downlink RS of the base station being greater than the first threshold value or the signal strength of the RS for the sidelink communication between the first terminal and the third terminal being greater than the second threshold value, the first terminal may be great interfered when randomly selecting the resource for the sidelink communication. At this point, the resource for measuring the relative position between the first terminal and the second terminal scheduled by the base station based on the scheduling instruction is determined. Since the resource is scheduled uniformly, the base station can schedule the resource based on the unified resource scheduling algorithm, which can reduce the interference between different terminals caused by the resource collision during the sidelink wireless communication, improve the channel communication quality, and ensure the accuracy of the relative positioning. The backoff mechanism is started and the resource for measuring the relative position between the first terminal and the second terminal is determined from the preset positioning resource pool. The backoff mechanism can reduce the interference between different terminals caused by the resource collision during the sidelink wireless communication, improve the channel communication quality, and ensure the accuracy of the relative positioning.

In an embodiment, the measurement configuration information includes the first threshold value. In response to the signal strength of the downlink RS of the base station measured based on the measurement configuration information being less than the first threshold value, the resource used to measure the relative position between the first terminal and the second terminal is determined from the preset positioning resource pool.

Since the signal strength of the downlink RS of the base station is less than the first threshold value, the first terminal may be less interfered when randomly selecting the resource for the sidelink communication. The first terminal obtains the resource for measuring the relative position between the first terminal and the second terminal from the preset positioning resource pool, which has less delay compared to obtaining the resource based on the acquisition request, and can reduce the resource collision, improve the channel communication quality, and ensure the accuracy of the relative positioning.

In an embodiment, in response to the signal strength of the downlink RS of the base station measured based on the measurement configuration information being greater than the first threshold value, the resource for measuring the relative position between the first terminal and the second terminal scheduled by the base station based on the scheduling instruction is determined. Alternatively, in response to the signal strength of the downlink RS of the base station measured based on the measurement configuration information being greater than the first threshold value, the backoff mechanism is started and the resource for measuring the relative position between the first terminal and the second terminal is determined from the preset positioning resource pool.

Since the signal strength of the downlink RS of the base station is greater than the first threshold value, the first terminal may be great interfered when randomly selecting the resource for the sidelink communication. At this point, the resource for measuring the relative position between the first terminal and the second terminal scheduled by the base station based on the scheduling instruction is determined. Since the resource is scheduled uniformly, the base station can schedule the resource based on the unified resource scheduling algorithm, which can reduce the interference between different terminals caused by the resource collision during the sidelink wireless communication, improve the channel communication quality, and ensure the accuracy of the relative positioning. The backoff mechanism is started and the resource for measuring the relative position between the first terminal and the second terminal is determined from the preset positioning resource pool. The backoff mechanism can reduce the interference between different terminals caused by the resource collision during the sidelink wireless communication, improve the channel communication quality, and ensure the accuracy of the relative positioning.

In an embodiment, the measurement configuration information includes the second threshold value. In response to the signal strength of the RS for the sidelink communication between the first terminal and the third terminal measured based on the measurement configuration information being less than the second threshold value, the resource for measuring the relative position between the first terminal and the second terminal is determined from the preset positioning resource pool.

Since the measured signal strength of the RS for the sidelink communication between the first terminal and the third terminal is less than the second threshold value, the first terminal is less interfered when randomly selecting the resource for the sidelink communication, and the resource used to measure the relative position between the first terminal and the second terminal is determined from the preset positioning resource pool, which has less delay compared to obtaining the resource based on the acquisition request, and can reduce the resource collision, and ensure the accuracy of the relative positioning.

In an embodiment, in response to the signal strength of the RS for the sidelink communication between the first terminal and the third terminal measured based on the measurement configuration information being greater than the second threshold value, the resource for measuring the relative position between the first terminal and the second terminal scheduled by the base station based on the scheduling instruction is determined. Alternatively, in response to the signal strength of the RS for the sidelink communication between the first terminal and the third terminal measured based on the measurement configuration information being greater than the second threshold value, the backoff mechanism is started and the resource for measuring the relative position between the first terminal and the second terminal is determined from the preset positioning resource pool.

When the signal strength of the downlink RS of the base station or the measured signal strength of the RS for the sidelink communication between the first terminal and the third terminal is greater than the second threshold value, the first terminal may be great interfered when randomly selecting the resource for the sidelink communication. At this point, the resource for measuring the relative position between the first terminal and the second terminal scheduled by the base station based on the scheduling instruction is determined. Since the resource is scheduled uniformly, the base station can schedule the resource based on the unified resource scheduling algorithm, which can reduce the interference between different terminals caused by the resource collision during the sidelink wireless communication, improve the channel communication quality, and ensure the accuracy of the relative positioning. The backoff mechanism is started and the resource for measuring the relative position between the first terminal and the second terminal is determined from the preset positioning resource pool. The backoff mechanism can reduce the interference between different terminals caused by the resource collision during the sidelink wireless communication, improve the channel communication quality, and ensure the accuracy of the relative positioning.

In an embodiment, the first terminal can determine the resource selection scheme based on the measurement configuration information, and measure the relative position between the first terminal and the second terminal according to the resource selection scheme determined based on the measurement configuration information sent by the base station, and the resource selection scheme is determined more flexibly. Compared to the way of using the fixed resource selection scheme to measure the relative position between the first terminal and the second terminal, the first terminal can determine the resource selection scheme matching the current channel situation based on the measurement configuration information and the current channel situation for the wireless transmission, which can reduce the interference between channels caused by multiplexing the resource and improve the reliability of data transmission, thereby improving the accuracy of relative positioning.

In an embodiment, the first threshold value is less than the second threshold value, and thus the signal strength of the downlink RS of the base station is more likely to be greater than the first threshold value. In this way, the first terminal can timely determine the resource for measuring the relative position between the first terminal and the second terminal scheduled by the base station based on the scheduling instruction. Since the resource is scheduled uniformly, the base station can schedule the resource based on the unified resource scheduling algorithm, which can reduce the interference between different terminals caused by the resource collision during the sidelink wireless communication, improve the channel communication quality between the base station and the terminal, and ensure the reliability of data transmission between the base station and the terminal.

In an embodiment, the measurement configuration information includes the threshold value, in which the threshold value is associated with a terminal attribute, and a terminal using the threshold value is determined based on the terminal attribute.

The terminal attribute can be pre-configured. Different terminal attributes correspond to different threshold values. For example, if the terminal attribute is A, the corresponding threshold value is set to a. If the terminal attribute is B, the corresponding threshold value is set to b.

In an embodiment, the terminal attribute includes: a cell area where the terminal is located and/or a power level for transmitting a signal by the terminal.

The threshold value is for terminals located in the cell area, and/or, the threshold value is for terminals transmitting signals with the power level.

In an embodiment, the terminal attribute includes the cell area where the terminal is located. The threshold value is determined based on the cell area where the first terminal is located. Since the channel environments of different cell areas are different, the threshold value is determined based on the cell area where the first terminal is located, which makes the threshold value more consistent with the channel condition and can better satisfy the needs of determining the resource selection scheme.

In an embodiment, the terminal attribute includes the power level for transmitting a signal by the terminal. The threshold value can be determined based on the power level for transmitting a signal by the first terminal. Since a change of the channel environment brings different interferences to the first terminal with different transmitting powers, the threshold value is determined based on the power level for transmitting a signal by the first terminal, which makes the setting of the threshold value more realistic and can better satisfy the needs of determining the resource selection scheme.

In an embodiment, there may be multiple threshold values; in which
different cell areas are associated with different threshold values;
   and/or,
different power levels are associated with different threshold values.

As shown in Table 1, a threshold value 1 is associated with a cell area A, a threshold value 2 is associated with a cell area B, and a threshold value 3 is associated with a cell area C. The first terminal can determine the threshold value to be used in determining the resource selection scheme after determining the area where the first terminal is located. For example, when the first terminal determines that the first terminal is located in the cell area A, the threshold value 1 can be determined to be used in determining the resource selection scheme.

**Table 1**

| threshold value | cell area |
|---|---|
| threshold value 1 | cell area A |
| threshold value 2 | cell area B |
| threshold value 3 | cell area C |

As shown in Table 2, a threshold value 1 is associated with a power level A, a threshold value 2 is associated with a power level B, and a threshold value 3 is associated with a power level C. The first terminal can determine the threshold value to be used in determining the resource selection scheme after determining the power level for transmitting a signal by the first terminal. For example, when the first terminal determines that the power level for transmitting a signal by the first terminal is power level A, the threshold value 1 can be determined to be used in determining the resource selection scheme.

**Table 2**

| threshold value | power level |
|---|---|
| threshold value 1 | power level A |
| threshold value 2 | power level B |
| threshold value 3 | power level C |

As shown in FIG. 4, a relative positioning method, applied to a first terminal, is provided in this embodiment. The method includes the following steps.

At step 41, measurement configuration information is received.

A resource selection scheme for a first terminal to measure a relative position between the first terminal and a second terminal is determined based on the measurement configuration information.

The first terminal and the second terminal may be, but are not limited to, cell phones, wearable devices, vehicle-mounted terminals, RSUs, smart home terminals, industrial sensing devices and/or medical devices.

The base station is an interface device for the terminal to access the network. The base station can be various types of base stations, such as, a base station for the 3G mobile communication network, a base station for the 4G mobile communication network, a base station for the 5G mobile communication network, or other evolved base stations.

In an embodiment, measuring the relative position between the first terminal and the second terminal may be measuring a distance between the first terminal and the second terminal and/or an AOA of the second terminal relative to the first terminal. For example, as shown in FIG. 3, measuring the relative position between cell phone A and cell phone B may be measuring a distance d between the cell phone A and the cell phone B and a relative angle α of the cell phone B relative to the cell phone A.

In an embodiment, the sidelink wireless communication is used to measure the relative position between the first terminal and the second terminal.

In an embodiment, as shown in FIG. 3, the first terminal is terminal A and the second terminal is terminal B. When performing the relative positioning between the terminal A and the terminal B, during the sidelink wireless communication, the start terminal A initiates an initial ranging signal to the feedback terminal B, and after the initial ranging signal is received, the feedback terminal B sends a feedback ranging signal to the start terminal A. The start terminal A calculates the relative distance d between the terminal A and the terminal B based on the time difference between the sending time of the initial ranging signal and the receiving time of the feedback ranging signal, and the terminal A calculates the relative angle α by measuring the AOA of the feedback ranging signal, and the relative positioning between the terminal A and the terminal B is performed based on the relative distance d and the relative angle α. The relative position between the first terminal A and the second terminal B is determined.

In an embodiment, when the first terminal and the second terminal need to carry out the sidelink wireless communication to realize the relative positioning, the resource for the sidelink wireless communication can be obtained by sending the acquisition request to the base station. The base station can carry out the unified resource scheduling in response to the resource acquisition requests of different terminals, and allocate different resources to different terminals, which can reduce the interference of wireless communication when the different terminals use the same resource at the same time and ensure the accuracy of the relative positioning.

In an embodiment, the base station may broadcast the positioning resource pool to the terminal, and the terminal may randomly select the resource in the positioning resource pool broadcasted by the network for the sidelink wireless communication, to realize the relative positioning. In another embodiment, the positioning resource pool can be pre-configured, and the terminal can randomly select a resource in the pre-configured positioning resource pool for the sidelink wireless communication, to realize the relative positioning.

In an embodiment, in order to reduce the resource collision when the terminals randomly select the resource for the sidelink wireless communication, the backoff mechanism can be started. The backoff mechanism includes resource reservation, resource reservation awareness and LBT.

In an embodiment, the first terminal uses the resource randomly selected from the positioning resource pool firstly for the sidelink wireless communication for the relative positioning. When the channel quality of the sidelink wireless communication using the resource randomly selected from the positioning resource pool by the first terminal is less than the preset threshold value, the first terminal sends the acquisition request for the sidelink wireless communication resource for the relative positioning to the base station. After receiving the acquisition request, the base station schedules the resource based on the scheduling instruction in response to the acquisition request, so that the first terminal can measure the relative position by the sidelink wireless communication mode. Since the resource is scheduled uniformly, the base station can schedule the resource based on the unified resource scheduling algorithm, which can reduce the interference between different terminals caused by the resource collision during the sidelink wireless communication, improve the channel communication quality, and ensure the accuracy of the relative positioning.

In an embodiment, in response to the RRC connection between the first terminal and the base station, when the sidelink wireless communication between the first terminal and the second terminal is performed, the base station schedules the resource for the sidelink wireless communication. In this way, since the resource is scheduled uniformly, the base station can timely reduce the interference between transmission channels caused by the resource collision between different terminals during the sidelink wireless communication for relative positioning, and thus the channel communication quality is improved and the accuracy of the relative positioning can be guaranteed.

In an embodiment, in the areas with a low deployment density of base stations (e.g., mountains, oceans), the resource used by the first terminal for the sidelink wireless communication for relative positioning is selected randomly from the pre-configured positioning resource pool. In this way, the sidelink communication is possible even when there is no resource scheduled by the base station for the sidelink wireless communication.

In an embodiment, the first terminal receives the measurement configuration information broadcasted by the base station. Alternatively, the first terminal receives the measurement configuration information sent from the base station in the RRC reconfiguration message. Therefore, the measurement configuration information is sent by the existing broadcast message or the RRC reconfiguration message, which improves the signaling compatibility of the broadcast message or the RRC reconfiguration message.

In an embodiment, , the first terminal receives the measurement configuration information sent from the base station in response to the acquisition request for the configuration information from the first terminal.

In an embodiment, when the application for the relative positioning is started, the first terminal sends the acquisition request for the configuration information to the base station, and upon reception of the acquisition request, the base station sends the measurement configuration information to the first terminal in response to the acquisition request.

In an embodiment, when it is detected that the channel quality of the sidelink for the relative positioning is less than the preset threshold value, the first terminal sends the acquisition request for the configuration information to the base station, and upon reception of the acquisition request, the base station sends the measurement configuration information to the first terminal in response to the acquisition request.

In an embodiment, in response to the RRC connection between the first terminal and the base station, the first terminal receives the measurement configuration information sent by the base station to the first terminal. In this way, the first terminal can obtain the resource selection scheme for measuring the relative position between the first terminal and the second terminal by the sidelink wireless communication mode in time.

As to the resource selection scheme, the resource for the sidelink wireless communication may be randomly selected from the preset positioning resource pool for measuring the relative position. Alternatively, the resource for the sidelink wireless communication is scheduled base on the scheduling instruction for measuring the relative position.

In an embodiment, the base station can configure the resource selection scheme for measuring the relative position based on the measurement configuration information that the first terminal randomly selects the resource for the sidelink wireless communication from the preset positioning resource pool . The first terminal determines the resource for the sidelink wireless communication randomly selected from the preset positioning resource pool based on the measurement configuration information as the resource selection scheme for measuring the relative position.

In an embodiment, the base station can configure the resource selection scheme for measuring the relative position based on the measurement configuration information that the first terminal uses the resource for the sidelink wireless communication scheduled by the base station based on the scheduling instruction. Based on the measurement configuration information, the first terminal determines the resource selection scheme for measuring the relative position by using the resource for the sidelink wireless communication scheduled by the base station based on the scheduling instruction.

In an embodiment, the measurement configuration information includes:
a type parameter of a RS; and
a threshold value of a signal strength of the RS associated with the resource selection scheme.

In an embodiment, the resource selection scheme is determined by the first terminal based on the relation between the signal strength of the RS measured and the threshold value.

The type indicated by the type parameter includes at least one of:
a downlink RS of a base station; and
a RS for a sidelink communication between the first terminal and a third terminal.

The downlink RS of the base station may include a SSB RS and a CSI-RS.

The RS for the sidelink communication between the first terminal and the third terminal may include a signal on a sidelink broadcast channel of the PHY layer, a DMRS and a CSI-RS.

In an embodiment, since the downlink RS of the base station is transmitted on the communication link between the base station and the terminal, and the RS between terminals is transmitted on the sidelink, the RS can be divided into at least two types according to the types of the transmission link.

In another embodiment, the RS can be divided into different types based on the sequence corresponding to the RS. For example, a RS using a synchronization sequence and a DMRS using a demodulation reference sequence belong to different types of RSs.

In an embodiment, the measurement configuration information further includes: a measurement type of the signal strength of the RS.

The measurement types include one of: a RSRP, a RSRQ, and a CQI.

In an embodiment, the measurement configuration information includes the threshold value, in which the threshold value is associated with a terminal attribute, and a terminal using the threshold value is determined based on the terminal attribute.

The terminal attribute can be pre-configured. Different terminal attributes correspond to different threshold values. For example, if the terminal attribute is A, the corresponding threshold value is set to a. If the terminal attribute is B, the corresponding threshold value is set to b.

In an embodiment, the terminal attribute includes: a cell area where the terminal is located and/or a power level for transmitting a signal by the terminal.

The threshold value is for terminals located in the cell area, and/or, the threshold value is for terminals transmitting signals with the power level.

In an embodiment, the terminal attribute includes the cell area where the terminal is located. The threshold value is determined based on the cell area where the first terminal is located. Since the channel environments of different cell areas are different, the threshold value is determined based on the cell area where the first terminal is located, which makes the threshold value more consistent with the channel condition and can better satisfy the needs of determining the resource selection scheme.

In an embodiment, the terminal attribute includes the power level for transmitting a signal by the terminal. The threshold value can be determined based on the power level for transmitting a signal by the first terminal. Since a change of the channel environment brings different interferences to the first terminal with different transmitting powers, the threshold value is determined based on the power level for transmitting a signal by the first terminal, which makes the setting of the threshold value more realistic and can better satisfy the needs of determining the resource selection scheme.

In an embodiment, there may be multiple threshold values; in which
different cell areas are associated with different threshold values;
   and/or,
different power levels are associated with different threshold values.

As shown in Table 1, the threshold value 1 is associated with the cell area A, and the area parameter is a. The threshold value 2 is associated with the cell area B, and the area parameter is b. The threshold value 3 is associated with the cell area C, and the area parameter is c. The first terminal can determine the threshold value to be used in determining the resource selection scheme after determining the area where the first terminal is located. For example, when the first terminal determines that the first terminal is located in the cell area A, and the area parameter is a, and then the threshold value 1 can be determined to be used in determining the resource selection scheme.

As shown in Table 2, the threshold value 1 is associated with the power level A, and the level parameter is a. The threshold value 2 is associated with the power level B, and the level parameter is b. The threshold value 3 is associated with a power level C, and the level parameter is c. The first terminal can determine the threshold value to be used in determining the resource selection scheme after determining the power level for transmitting a signal by the first terminal. For example, when the first terminal determines that the power level for transmitting a signal by the first terminal is power level A, and the level parameter is a, and then the threshold value 1 can be determined to be used in determining the resource selection scheme.

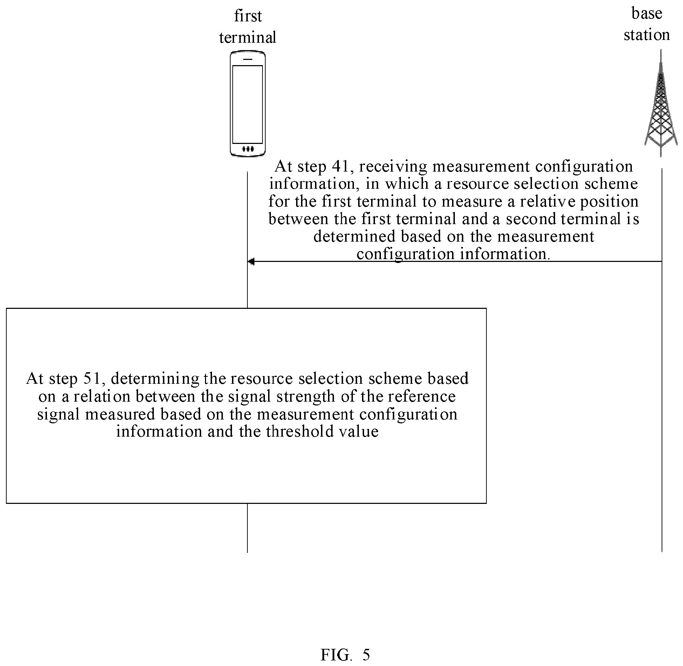

As shown in FIG. 5, a relative positioning method is provided in the embodiment. The method includes the following steps.

At step 51, the resource selection scheme is determined based on a relation between the signal strength of the RS measured based on the measurement configuration information and the threshold value.

In an embodiment, when the signal strength is less than the threshold value, a resource is randomly selected from the preset positioning resource pool as a first resource selection scheme for measuring the relative position.

In an embodiment, when the signal strength is greater than the threshold value, a resource is selected based on the scheduling instruction as a second resource selection scheme for measuring the relative position.

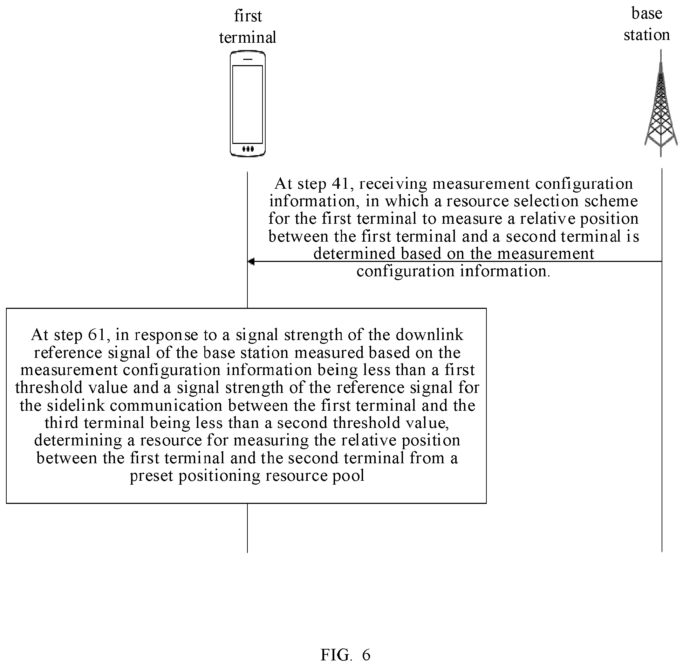

As shown in FIG. 6, a relative positioning method is provided in the embodiment. At step 51, determining the resource selection scheme based on the relation between the signal strength of the RS measured based on the measurement configuration information and the threshold value includes the following step.

At step 61, in response to a signal strength of the downlink RS of the base station measured based on the measurement configuration information being less than a first threshold value and a signal strength of the RS for the sidelink communication between the first terminal and the third terminal being less than a second threshold value, a resource for measuring the relative position between the first terminal and the second terminal is determined from a preset positioning resource pool.

Since the signal strength of the downlink RS of the base station is less than the first threshold value and the signal strength of the RS for the sidelink communication between the first terminal and the third terminal is less than the second threshold value, the first terminal may be less interfered when randomly selecting the resource for the sidelink communication. The first terminal obtains the resource for measuring the relative position between the first terminal and the second terminal from the preset positioning resource pool, which has less delay compared to obtaining the resource based on the acquisition request, and can reduce the resource collision and ensure the accuracy of the relative positioning.

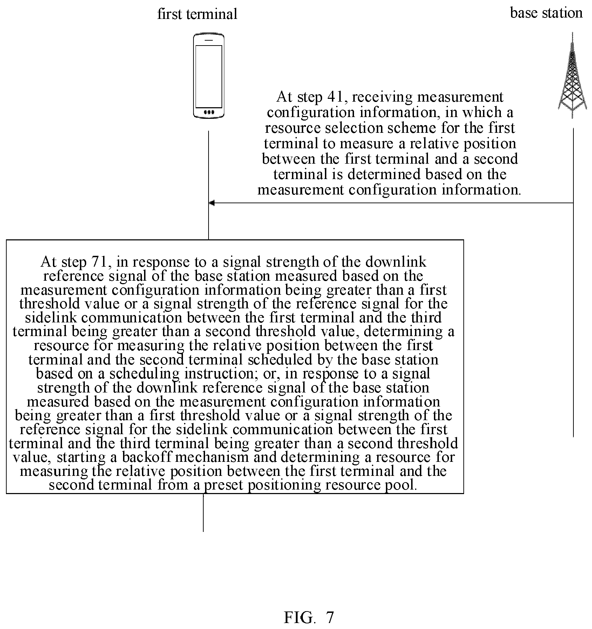

As shown in FIG. 7, a relative positioning method is provided in the embodiment. At step 51, determining the resource selection scheme based on the relation between the signal strength of the RS measured based on the measurement configuration information and the threshold value includes the following step.

Step 71 includes: in response to a signal strength of the downlink RS of the base station measured based on the measurement configuration information being greater than a first threshold value or a signal strength of the RS for the sidelink communication between the first terminal and the third terminal being greater than a second threshold value, determining a resource for measuring the relative position between the first terminal and the second terminal scheduled by the base station based on a scheduling instruction;
or
in response to a signal strength of the downlink RS of the base station measured based on the measurement configuration information being greater than a first threshold value or a signal strength of the RS for the sidelink communication between the first terminal and the third terminal being greater than a second threshold value, starting a backoff mechanism and determining a resource for measuring the relative position between the first terminal and the second terminal from a preset positioning resource pool.

In response to the signal strength of the downlink RS of the base station being greater than the first threshold value or the signal strength of the RS for the sidelink communication between the first terminal and the third terminal being greater than the second threshold value, the first terminal may be great interfered when randomly selecting the resource for the sidelink communication. At this point, the resource for measuring the relative position between the first terminal and the second terminal scheduled by the base station based on the scheduling instruction is determined. Since the resource is scheduled uniformly, the base station can schedule the resource based on the unified resource scheduling algorithm, which can reduce the interference between different terminals caused by the resource collision during the sidelink wireless communication, improve the channel communication quality, and ensure the accuracy of the relative positioning. The backoff mechanism is started and the resource for measuring the relative position between the first terminal and the second terminal is determined from the preset positioning resource pool. The backoff mechanism can reduce the interference between different terminals caused by the resource collision during the sidelink wireless communication, improve the channel communication quality, and ensure the accuracy of the relative positioning.

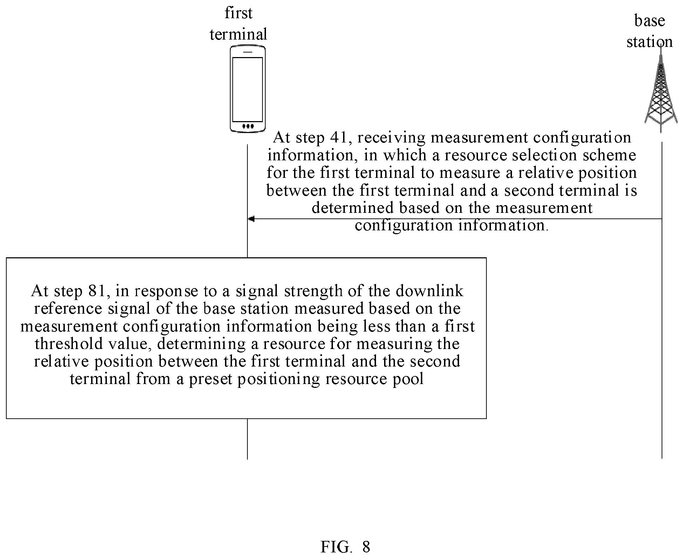

As shown in FIG. 8, a relative positioning method is provided in the embodiment. At step 51, determining the resource selection scheme based on the relation between the signal strength of the RS measured based on the measurement configuration information and the threshold value includes the following step.

At step 81, in response to a signal strength of the downlink RS of the base station measured based on the measurement configuration information being less than a first threshold value, a resource is determined for measuring the relative position between the first terminal and the second terminal from a preset positioning resource pool.

Since the signal strength of the downlink RS of the base station is less than the first threshold value, the first terminal may be less interfered when randomly selecting the resource for the sidelink communication. The first terminal obtains the resource for measuring the relative position between the first terminal and the second terminal from the preset positioning resource pool, which has less delay compared to obtaining the resource based on the acquisition request, and can reduce the resource collision, improve the channel communication quality, and ensure the accuracy of the relative positioning.

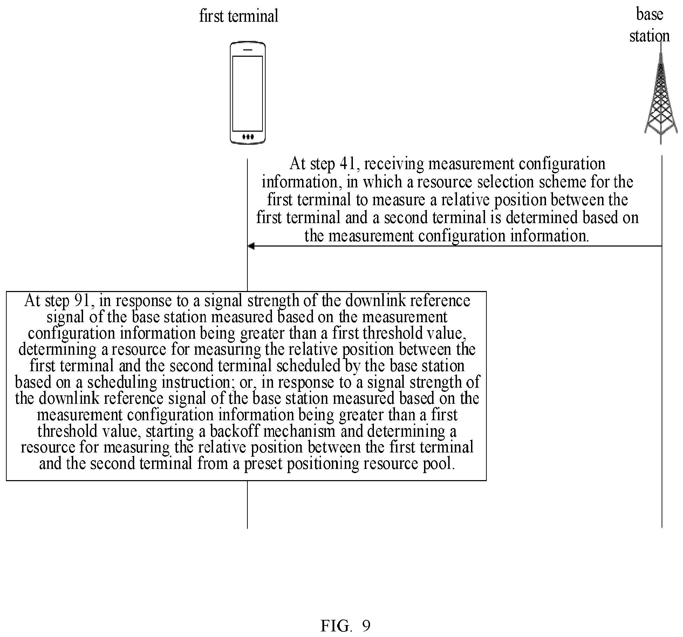

As shown in FIG. 9, a relative positioning method is provided in the embodiment. At step 51, determining the resource selection scheme based on the relation between the signal strength of the RS measured based on the measurement configuration information and the threshold value includes the following step.

Step 91 includes: in response to a signal strength of the downlink RS of the base station measured based on the measurement configuration information being greater than a first threshold value, determining a resource for measuring the relative position between the first terminal and the second terminal scheduled by the base station based on a scheduling instruction;
or
in response to a signal strength of the downlink RS of the base station measured based on the measurement configuration information being greater than a first threshold value, starting a backoff mechanism and determining a resource for measuring the relative position between the first terminal and the second terminal from a preset positioning resource pool.

Since the signal strength of the downlink RS of the base station is greater than the first threshold value, the first terminal may be great interfered when randomly selecting the resource for the sidelink communication. At this point, the resource for measuring the relative position between the first terminal and the second terminal scheduled by the base station based on the scheduling instruction is determined. Since the resource is scheduled uniformly, the base station can schedule the resource based on the unified resource scheduling algorithm, which can reduce the interference between different terminals caused by the resource collision during the sidelink wireless communication, improve the channel communication quality, and ensure the accuracy of the relative positioning. The backoff mechanism is started and the resource for measuring the relative position between the first terminal and the second terminal is determined from the preset positioning resource pool. The backoff mechanism can reduce the interference between different terminals caused by the resource collision during the sidelink wireless communication, improve the channel communication quality, and ensure the accuracy of the relative positioning.

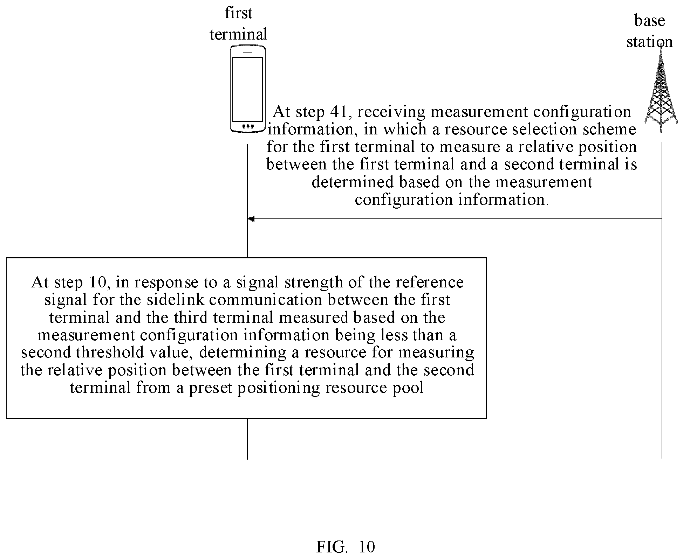

As shown in FIG. 10, a relative positioning method is provided in the embodiment. At step 51, determining the resource selection scheme based on the relation between the signal strength of the RS measured based on the measurement configuration information and the threshold value includes the following step.

A step 10, in response to a signal strength of the RS for the sidelink communication between the first terminal and the third terminal measured based on the measurement configuration information being less than a second threshold value, a resource for measuring the relative position between the first terminal and the second terminal is determined from a preset positioning resource pool.

Since the measured signal strength of the RS for the sidelink communication between the first terminal and the third terminal is less than the second threshold value, the first terminal is less interfered when randomly selecting the resource for the sidelink communication, and the resource used to measure the relative position between the first terminal and the second terminal is determined from the preset positioning resource pool, which has less delay compared to obtaining the resource based on the acquisition request, and can reduce the resource collision, and ensure the accuracy of the relative positioning.

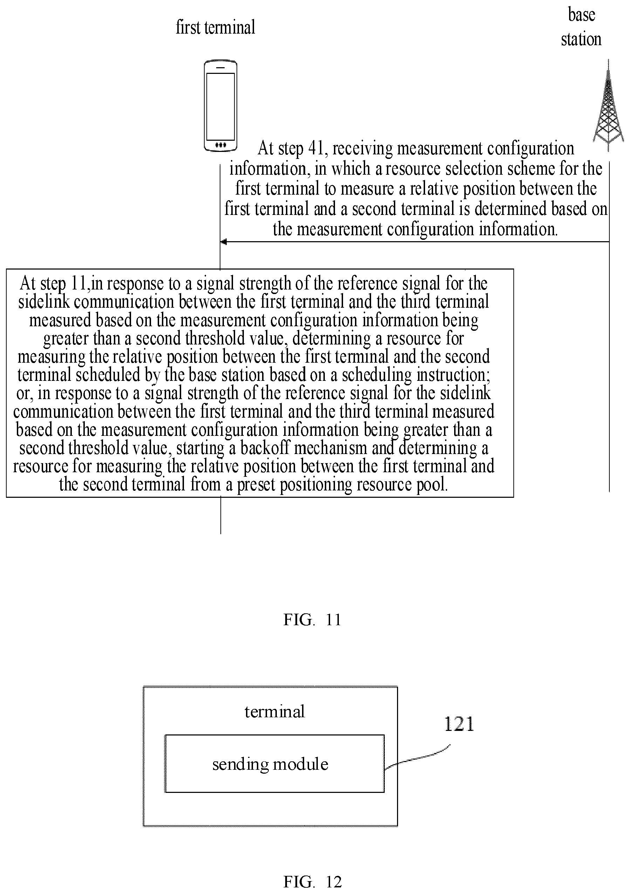

As shown in FIG. 11, a relative positioning method is provided in the embodiment. At step 51, determining the resource selection scheme based on the relation between the signal strength of the RS measured based on the measurement configuration information and the threshold value includes the following step.

Step 11 includes: in response to a signal strength of the RS for the sidelink communication between the first terminal and the third terminal measured based on the measurement configuration information being greater than a second threshold value, determining a resource for measuring the relative position between the first terminal and the second terminal scheduled by the base station based on a scheduling instruction;
or
in response to a signal strength of the RS for the sidelink communication between the first terminal and the third terminal measured based on the measurement configuration information being greater than a second threshold value, starting a backoff mechanism and determining a resource for measuring the relative position between the first terminal and the second terminal from a preset positioning resource pool.

When the signal strength of the downlink RS of the base station or the measured signal strength of the RS for the sidelink communication between the first terminal and the third terminal is greater than the second threshold value, the first terminal may be great interfered when randomly selecting the resource for the sidelink communication. At this point, the resource for measuring the relative position between the first terminal and the second terminal scheduled by the base station based on the scheduling instruction is determined. Since the resource is scheduled uniformly, the base station can schedule the resource based on the unified resource scheduling algorithm, which can reduce the interference between different terminals caused by the resource collision during the sidelink wireless communication, improve the channel communication quality, and ensure the accuracy of the relative positioning. The backoff mechanism is started and the resource for measuring the relative position between the first terminal and the second terminal is determined from the preset positioning resource pool. The backoff mechanism can reduce the interference between different terminals caused by the resource collision during the sidelink wireless communication, improve the channel communication quality, and ensure the accuracy of the relative positioning.

In an embodiment, the first threshold value is less than the second threshold value, and thus the signal strength of the downlink RS of the base station is more likely to be greater than the first threshold value. In this way, the first terminal can timely determine the resource for measuring the relative position between the first terminal and the second terminal scheduled by the base station based on the scheduling instruction. Since the resource is scheduled uniformly, the base station can schedule the resource based on the unified resource scheduling algorithm, which can reduce the interference between different terminals caused by the resource collision during the sidelink wireless communication, improve the channel communication quality between the base station and the terminal, and ensure the reliability of data transmission between the base station and the terminal.

As shown in FIG. 12, the embodiment provides a base station. The base station includes a sending module 121.

The sending module 121 is configured to send measurement configuration information.

A resource selection scheme for a first terminal to measure a relative position between the first terminal and a second terminal is determined based on the measurement configuration information.

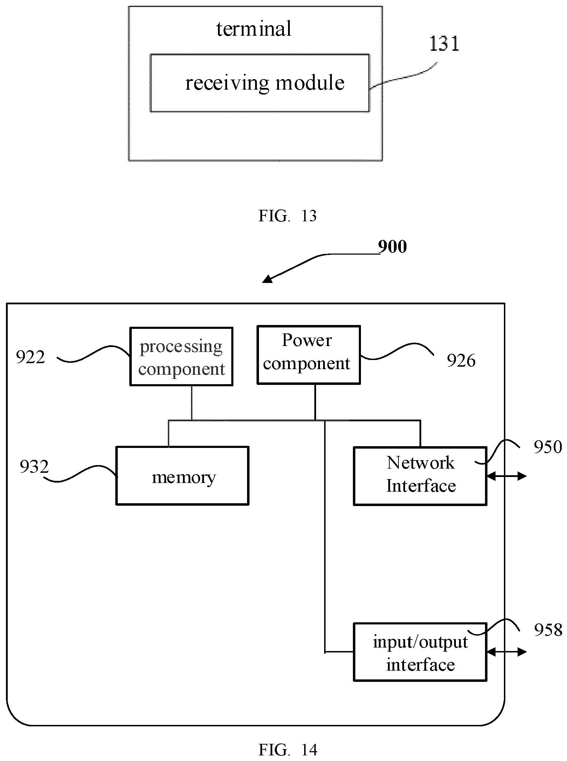

As shown in FIG. 13, the embodiment provides a terminal. The terminal includes a receiving module 131.

The receiving module 131 is configured to receive measurement configuration information.

A resource selection scheme for a first terminal to measure a relative position between the first terminal and a second terminal is determined based on the measurement configuration information.

With regard to the apparatus in the above embodiments, the specific manner in which the individual module perform its operation has been described in detail in the embodiments relating to the method, which will not be described in detail here.

The embodiment of the disclosure provides a communication device. The communication device includes:
a processor;
a memory for storing instructions executable by the processor; and
in which when the executable instructions are executed, the processor is configured to implement the method according to any embodiment of the disclosure.

The processor may include various types of storage mediums. The storage medium is a non-transitory computer storage medium capable of continuing to store information after the communication device is powered down.

The processor can be connected to the memory via a bus for reading the executable programs stored on the memory.

The embodiments of the disclosure further provide a computer storage medium. The computer storage medium stores computer executable programs, and when the executable programs are executed by a processor, the method of any embodiment of the disclosure is implemented.

With respect to the apparatus of the above embodiments, the specific manner in which the individual module perform its operation has been described in detail in the embodiments relating to the method, and will not be described in detail herein.

FIG. 14 illustrates a structure of a base station 900 according to an embodiment of the disclosure. For example, the base station 900 may be provided as a network side device. As shown in FIG. 14, the base station 900 includes a processing component 922, which includes one or more processors, and a memory resource represented by a memory 932 for storing instructions executable by the processing component 922, such as application programs. The application program stored in the memory 932 may include one or more modules, each module corresponds to a set of instructions. In addition, the processing component 922 is configured to execute instructions to perform any of the method described above and previously applied to the base station, for example, the method shown in FIG. 2 to FIG. 6.

The base station 900 may also include a power component 926 configured to perform power management of the base station 900, a wired or wireless network interface 950 configured to connect the base station 900 to the network, and an I/O interface 958. The base station 900 may operate based on an operating system stored on the memory 932, such as Windows Server^{™}, Mac OS X^{™}, Unix^{™}, Linux^{™}, FreeBSD^{™} or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A relative positioning method, performed by a wireless communication system comprising a base station and a first terminal, comprising:
sending (21), by the base station, measurement configuration information to a first terminal;
wherein a resource selection scheme for the first terminal to measure a relative position between the first terminal and a second terminal is determined based on the measurement configuration information;
wherein the measurement configuration information comprises:
a type parameter of a reference signal; and
at least one threshold value of a signal strength of the reference signal associated with the resource selection scheme; wherein the at least one threshold value is associated with a terminal attribute, and a terminal using the at least one threshold value is determined based on the terminal attribute;
wherein a type indicated by the type parameter comprises:
a downlink reference signal of the base station; and
a reference signal for a sidelink communication between the first terminal and a third terminal;
wherein the at least one threshold value comprises a first threshold value and a second threshold value;
receiving (41), by the first terminal, the measurement configuration information; and
determining, by the first terminal, the resource selection scheme for the first terminal to measure the relative position between the first terminal and the second terminal based on the measurement configuration information;
the method further comprises:
determining, by the first terminal, the resource selection scheme based on a relation between the signal strength of the reference signal measured based on the measurement configuration information and the at least one threshold value (51);
wherein determining, by the first terminal, the resource selection scheme based on the relation between the signal strength of the reference signal measured based on the measurement configuration information and the at least one threshold value (51), comprises:
in response to a signal strength of the downlink reference signal of the base station measured based on the measurement configuration information being less than the first threshold value and a signal strength of the reference signal for the sidelink communication between the first terminal and the third terminal being less than the second threshold value, determining, by the first terminal, a resource for measuring the relative position between the first terminal and the second terminal from a preset positioning resource pool (61); or
in response to a signal strength of the downlink reference signal of the base station measured based on the measurement configuration information being greater than the first threshold value or a signal strength of the reference signal for the sidelink communication between the first terminal and the third terminal being greater than the second threshold value, determining, by the first terminal, a resource for measuring the relative position between the first terminal and the second terminal scheduled by the base station based on a scheduling instruction; or in response to a signal strength of the downlink reference signal of the base station measured based on the measurement configuration information being greater than the first threshold value or a signal strength of the reference signal for the sidelink communication between the first terminal and the third terminal being greater than the second threshold value, starting, by the first terminal, a backoff mechanism and determining a resource for measuring the relative position between the first terminal and the second terminal from a preset positioning resource pool (71); or
in response to a signal strength of the reference signal for the sidelink communication between the first terminal and the third terminal measured based on the measurement configuration information being less than the second threshold value, determining, by the first terminal, a resource for measuring the relative position between the first terminal and the second terminal from a preset positioning resource pool (10); or
in response to a signal strength of the reference signal for the sidelink communication between the first terminal and the third terminal measured based on the measurement configuration information being greater than the second threshold value, determining, by the first terminal, a resource for measuring the relative position between the first terminal and the second terminal scheduled by the base station based on a scheduling instruction; or in response to a signal strength of the reference signal for the sidelink communication between the first terminal and the third terminal measured based on the measurement configuration information being greater than the second threshold value, starting, by the first terminal, a backoff mechanism and determining a resource for measuring the relative position between the first terminal and the second terminal from a preset positioning resource pool (11).

2. The method of claim 1, wherein the measurement configuration information further comprises:
a measurement type of the signal strength of the reference signal.

3. The method of claim 1, wherein the terminal attribute comprises: a cell area where the terminal is located and/or a power level for transmitting a signal by the terminal;
the at least one threshold value is for terminals located in the cell area, and/or, the at least one threshold value is for terminals transmitting signals with the power level.

4. The method of claim 1, wherein the resource selection scheme comprises:
selecting a resource randomly from the preset positioning resource pool as a first resource selection scheme for measuring the relative position; or,
scheduling a resource based on the scheduling instruction as a second resource selection scheme for measuring the relative position.

5. A relative positioning method, performed by a first terminal, comprising:
receiving (41) measurement configuration information; and
determining a resource selection scheme for the first terminal to measure a relative position between the first terminal and a second terminal based on the measurement configuration information;
wherein the measurement configuration information comprises:
a type parameter of a reference signal; and
at least one threshold value of a signal strength of the reference signal associated with the resource selection scheme; wherein the at least one threshold value is associated with a terminal attribute, and a terminal using the at least one threshold value is determined based on the terminal attribute;
wherein a type indicated by the type parameter comprises:
a downlink reference signal of a base station; and
a reference signal for a sidelink communication between the first terminal and a third terminal;
wherein the at least one threshold value comprises a first threshold value and a second threshold value;
the method further comprises:
determining the resource selection scheme based on a relation between the signal strength of the reference signal measured based on the measurement configuration information and the at least one threshold value (51).
wherein determining the resource selection scheme based on the relation between the signal strength of the reference signal measured based on the measurement configuration information and the at least one threshold value (51), comprises:
in response to a signal strength of the downlink reference signal of the base station measured based on the measurement configuration information being less than the first threshold value and a signal strength of the reference signal for the sidelink communication between the first terminal and the third terminal being less than the second threshold value, determining a resource for measuring the relative position between the first terminal and the second terminal from a preset positioning resource pool (61); or
in response to a signal strength of the downlink reference signal of the base station measured based on the measurement configuration information being greater than the first threshold value or a signal strength of the reference signal for the sidelink communication between the first terminal and the third terminal being greater than the second threshold value, determining a resource for measuring the relative position between the first terminal and the second terminal scheduled by the base station based on a scheduling instruction; or in response to a signal strength of the downlink reference signal of the base station measured based on the measurement configuration information being greater than the first threshold value or a signal strength of the reference signal for the sidelink communication between the first terminal and the third terminal being greater than the second threshold value, starting a backoff mechanism and determining a resource for measuring the relative position between the first terminal and the second terminal from a preset positioning resource pool (71); or
in response to a signal strength of the reference signal for the sidelink communication between the first terminal and the third terminal measured based on the measurement configuration information being less than the second threshold value, determining a resource for measuring the relative position between the first terminal and the second terminal from a preset positioning resource pool (10); or
in response to a signal strength of the reference signal for the sidelink communication between the first terminal and the third terminal measured based on the measurement configuration information being greater than the second threshold value, determining a resource for measuring the relative position between the first terminal and the second terminal scheduled by the base station based on a scheduling instruction; or in response to a signal strength of the reference signal for the sidelink communication between the first terminal and the third terminal measured based on the measurement configuration information being greater than the second threshold value, starting a backoff mechanism and determining a resource for measuring the relative position between the first terminal and the second terminal from a preset positioning resource pool (11).

6. The method of claim 5, wherein
the terminal attribute comprises: a cell area where the terminal is located and/or a power level for transmitting a signal by the terminal; and
the at least one threshold value is for terminals located in the cell area, and/or, the at least one threshold value is for terminals transmitting signals with the power level;
the method further comprises:
determining the at least one threshold value corresponding to the cell area where the first terminal is located; or
determining the at least one threshold value based on a power level of the first terminal.

7. A communication device, comprising:
an antenna;
a memory; and
a processor, connected to the antenna and to the memory respectively, and configured to control a sending and receiving of the antenna by executing computer-executable instructions stored on the memory and implement the method according to any one of claims 5 to 6.

## Patentansprüche

1. Verfahren zur relativen Positionierung, welches von einem Drahtlos-Kommunikationssystem durchgeführt wird, das eine Basisstation und ein erstes Endgerät umfasst, umfassend:
Senden (21) von Messkonfigurationsinformationen durch die Basisstation an ein erstes Endgerät;
wobei auf Grundlage der Messkonfigurationsinformationen ein Ressourcenauswahlschema für das erste Endgerät zum Messen einer relativen Position zwischen dem ersten Endgerät und einem zweiten Endgerät bestimmt wird;
wobei die Messkonfigurationsinformationen umfassen:
einen Typparameter eines Referenzsignals; und
zumindest einen Schwellenwert einer Signalstärke des dem Ressourcenauswahlschema zugeordneten Referenzsignals, wobei der zumindest eine Schwellenwert einem Endgeräteattribut zugeordnet ist und ein Endgerät, das den zumindest einen Schwellenwert verwendet, auf Grundlage des Endgeräteattributs bestimmt wird;
wobei ein durch den Typparameter angegebener Typ umfasst:
ein Downlink-Referenzsignal der Basisstation; und
ein Referenzsignal für eine Sidelink-Kommunikation zwischen dem ersten Endgerät und einem dritten Endgerät;
wobei der zumindest eine Schwellenwert einen ersten Schwellenwert und einen zweiten Schwellenwert umfasst;
Empfangen (41) der Messkonfigurationsinformationen durch das erste Endgerät; und
Bestimmen, durch das erste Endgerät, des Ressourcenauswahlschemas für das erste Endgerät zum Messen der relativen Position zwischen dem ersten Endgerät und dem zweiten Endgerät auf Grundlage der Messkonfigurationsinformationen;
wobei das Verfahren ferner umfasst:
Bestimmen, durch das erste Endgerät, des Ressourcenauswahlschemas auf Grundlage einer Beziehung zwischen der auf Grundlage der Messkonfigurationsinformationen gemessenen Signalstärke des Referenzsignals und dem zumindest einen Schwellenwert (51);
wobei das Bestimmen, durch das erste Endgerät, des Ressourcenauswahlschemas auf Grundlage der Beziehung zwischen der auf Grundlage der Messkonfigurationsinformationen gemessenen Signalstärke des Referenzsignals und dem zumindest einen Schwellenwert (51) umfasst:
als Reaktion darauf, dass eine auf Grundlage der Messkonfigurationsinformationen gemessene Signalstärke des Downlink-Referenzsignals der Basisstation kleiner als der erste Schwellenwert ist und eine Signalstärke des Referenzsignals für die Sidelink-Kommunikation zwischen dem ersten Endgerät und dem dritten Endgerät kleiner als der zweite Schwellenwert ist, Bestimmen, durch das erste Endgerät, einer Ressource zum Messen der relativen Position zwischen dem ersten Endgerät und dem zweiten Endgerät aus einem vorgegebenen Positionierungsressourcenpool (61); oder
als Reaktion darauf, dass eine auf Grundlage der Messkonfigurationsinformationen gemessene Signalstärke des Downlink-Referenzsignals der Basisstation größer als der erste Schwellenwert ist oder eine Signalstärke des Referenzsignals für die Sidelink-Kommunikation zwischen dem ersten Endgerät und dem dritten Endgerät größer als der zweite Schwellenwert ist, Bestimmen, durch das erste Endgerät, einer von der Basisstation auf Grundlage einer Scheduling-Anweisung geschedulten Ressource zum Messen der relativen Position zwischen dem ersten Endgerät und dem zweiten Endgerät; oder als Reaktion darauf, dass eine auf Grundlage der Messkonfigurationsinformationen gemessene Signalstärke des Downlink-Referenzsignals der Basisstation größer als der erste Schwellenwert ist oder eine Signalstärke des Referenzsignals für die Sidelink-Kommunikation zwischen dem ersten Endgerät und dem dritten Endgerät größer als der zweite Schwellenwert ist, Starten, durch das erste Endgerät, eines Backoff-Mechanismus und Bestimmen einer Ressource zum Messen der relativen Position zwischen dem ersten Endgerät und dem zweiten Endgerät aus einem vorgegebenen Positionierungsressourcenpool (71); oder
als Reaktion darauf, dass eine auf Grundlage der Messkonfigurationsinformationen gemessene Signalstärke des Referenzsignals für die Sidelink-Kommunikation zwischen dem ersten Endgerät und dem dritten Endgerät kleiner als der zweite Schwellenwert ist, Bestimmen, durch das erste Endgerät, einer Ressource zum Messen der relativen Position zwischen dem ersten Endgerät und dem zweiten Endgerät aus einem vorgegebenen Positionierungsressourcenpool (10); oder
als Reaktion darauf, dass eine auf Grundlage der Messkonfigurationsinformationen gemessene Signalstärke des Referenzsignals für die Sidelink-Kommunikation zwischen dem ersten Endgerät und dem dritten Endgerät größer als der zweite Schwellenwert ist, Bestimmen, durch das erste Endgerät, einer von der Basisstation auf Grundlage einer Scheduling-Anweisung geschedulten Ressource zum Messen der relativen Position zwischen dem ersten Endgerät und dem zweiten Endgerät; oder als Reaktion darauf, dass eine auf Grundlage der Messkonfigurationsinformationen gemessene Signalstärke des Referenzsignals für die Sidelink-Kommunikation zwischen dem ersten Endgerät und dem dritten Endgerät größer als der zweite Schwellenwert ist, Starten, durch das erste Endgerät, eines Backoff-Mechanismus und Bestimmen einer Ressource zum Messen der relativen Position zwischen dem ersten Endgerät und dem zweiten Endgerät aus einem vorgegebenen Positionierungsressourcenpool (11).

2. Verfahren nach Anspruch 1, wobei die Messkonfigurationsinformationen ferner umfassen:
einen Messtyp der Signalstärke des Referenzsignals.

3. Verfahren nach Anspruch 1, wobei das Endgeräteattribut umfasst: einen Zellbereich, in dem sich das Endgerät befindet, und/oder einen Leistungspegel zum Senden eines Signals durch das Endgerät;
wobei der zumindest eine Schwellenwert für Endgeräte vorgesehen ist, die sich in dem Zellbereich befinden, und/oder der zumindest eine Schwellenwert für Endgeräte vorgesehen ist, die Signale mit dem Leistungspegel senden.

4. Verfahren nach Anspruch 1, wobei das Ressourcenauswahlschema umfasst:
zufälliges Auswählen einer Ressource aus dem vorgegebenen Positionierungsressourcenpool als ein erstes Ressourcenauswahlschema zum Messen der relativen Position; oder
Scheduling einer Ressource auf Grundlage der Scheduling-Anweisung als ein zweites Ressourcenauswahlschema zum Messen der relativen Position.

5. Verfahren zur relativen Positionierung, welches von einem ersten Endgerät durchgeführt wird, umfassend:
Empfangen (41) von Messkonfigurationsinformationen; und
Bestimmen eines Ressourcenauswahlschemas für das erste Endgerät zum Messen einer relativen Position zwischen dem ersten Endgerät und einem zweiten Endgerät auf Grundlage der Messkonfigurationsinformationen;
wobei die Messkonfigurationsinformationen umfassen:
einen Typparameter eines Referenzsignals; und
zumindest einen Schwellenwert einer Signalstärke des dem Ressourcenauswahlschema zugeordneten Referenzsignals, wobei der zumindest eine Schwellenwert einem Endgeräteattribut zugeordnet ist und ein Endgerät, das den zumindest einen Schwellenwert verwendet, auf Grundlage des Endgeräteattributs bestimmt wird;
wobei ein durch den Typparameter angegebener Typ umfasst:
ein Downlink-Referenzsignal einer Basisstation; und
ein Referenzsignal für eine Sidelink-Kommunikation zwischen dem ersten Endgerät und einem dritten Endgerät;
wobei der zumindest eine Schwellenwert einen ersten Schwellenwert und einen zweiten Schwellenwert umfasst;
wobei das Verfahren ferner umfasst:
Bestimmen des Ressourcenauswahlschemas auf Grundlage einer Beziehung zwischen der auf Grundlage der Messkonfigurationsinformationen gemessenen Signalstärke des Referenzsignals und dem zumindest einen Schwellenwert (51);
wobei das Bestimmen des Ressourcenauswahlschemas auf Grundlage der Beziehung zwischen der auf Grundlage der Messkonfigurationsinformationen gemessenen Signalstärke des Referenzsignals und dem zumindest einen Schwellenwert (51) umfasst:
als Reaktion darauf, dass eine auf Grundlage der Messkonfigurationsinformationen gemessene Signalstärke des Downlink-Referenzsignals der Basisstation kleiner als der erste Schwellenwert ist und eine Signalstärke des Referenzsignals für die Sidelink-Kommunikation zwischen dem ersten Endgerät und dem dritten Endgerät kleiner als der zweite Schwellenwert ist, Bestimmen einer Ressource zum Messen der relativen Position zwischen dem ersten Endgerät und dem zweiten Endgerät aus einem vorgegebenen Positionierungsressourcenpool (61); oder
als Reaktion darauf, dass eine auf Grundlage der Messkonfigurationsinformationen gemessene Signalstärke des Downlink-Referenzsignals der Basisstation größer als der erste Schwellenwert ist oder eine Signalstärke des Referenzsignals für die Sidelink-Kommunikation zwischen dem ersten Endgerät und dem dritten Endgerät größer als der zweite Schwellenwert ist, Bestimmen einer von der Basisstation auf Grundlage einer Scheduling-Anweisung geschedulten Ressource zum Messen der relativen Position zwischen dem ersten Endgerät und dem zweiten Endgerät; oder als Reaktion darauf, dass eine auf Grundlage der Messkonfigurationsinformationen gemessene Signalstärke des Downlink-Referenzsignals der Basisstation größer als der erste Schwellenwert ist oder eine Signalstärke des Referenzsignals für die Sidelink-Kommunikation zwischen dem ersten Endgerät und dem dritten Endgerät größer als der zweite Schwellenwert ist, Starten eines Backoff-Mechanismus und Bestimmen einer Ressource zum Messen der relativen Position zwischen dem ersten Endgerät und dem zweiten Endgerät aus einem vorgegebenen Positionierungsressourcenpool (71); oder
als Reaktion darauf, dass eine auf Grundlage der Messkonfigurationsinformationen gemessene Signalstärke des Referenzsignals für die Sidelink-Kommunikation zwischen dem ersten Endgerät und dem dritten Endgerät kleiner als der zweite Schwellenwert ist, Bestimmen einer Ressource zum Messen der relativen Position zwischen dem ersten Endgerät und dem zweiten Endgerät aus einem vorgegebenen Positionierungsressourcenpool (10); oder
als Reaktion darauf, dass eine auf Grundlage der Messkonfigurationsinformationen gemessene Signalstärke des Referenzsignals für die Sidelink-Kommunikation zwischen dem ersten Endgerät und dem dritten Endgerät größer als der zweite Schwellenwert ist, Bestimmen einer von der Basisstation auf Grundlage einer Scheduling-Anweisung geschedulten Ressource zum Messen der relativen Position zwischen dem ersten Endgerät und dem zweiten Endgerät; oder als Reaktion darauf, dass eine auf Grundlage der Messkonfigurationsinformationen gemessene Signalstärke des Referenzsignals für die Sidelink-Kommunikation zwischen dem ersten Endgerät und dem dritten Endgerät größer als der zweite Schwellenwert ist, Starten eines Backoff-Mechanismus und Bestimmen einer Ressource zum Messen der relativen Position zwischen dem ersten Endgerät und dem zweiten Endgerät aus einem vorgegebenen Positionierungsressourcenpool (11).

6. Verfahren nach Anspruch 5, wobei
das Endgeräteattribut umfasst: einen Zellbereich, in dem sich das Endgerät befindet, und/oder einen Leistungspegel zum Senden eines Signals durch das Endgerät; und
der zumindest eine Schwellenwert für Endgeräte vorgesehen ist, die sich in dem Zellbereich befinden, und/oder der zumindest eine Schwellenwert für Endgeräte vorgesehen ist, die Signale mit dem Leistungspegel senden;
wobei das Verfahren ferner umfasst:
Bestimmen des zumindest einen Schwellenwerts entsprechend dem Zellbereich, in dem sich das erste Endgerät befindet; oder
Bestimmen des zumindest einen Schwellenwerts auf Grundlage eines Leistungspegels des ersten Endgeräts.

7. Kommunikationsvorrichtung, umfassend:
eine Antenne;
einen Speicher; und
einen Prozessor, der jeweils mit der Antenne und dem Speicher verbunden und dazu konfiguriert ist, durch Ausführen computerausführbarer Anweisungen, die in dem Speicher gespeichert sind, ein Senden und Empfangen der Antenne zu steuern und das Verfahren nach einem der Ansprüche 5 bis 6 zu implementieren.

## Revendications

1. Procédé de positionnement relatif, mis en œuvre par un système de communication sans fil comprenant une station de base et un premier terminal, comprenant les étapes consistant à :
envoyer (21), par la station de base, des informations de configuration de mesure à un premier terminal ;
dans lequel un schéma de sélection de ressource du premier terminal pour mesurer une position relative entre le premier terminal et un deuxième terminal est déterminé sur la base des informations de configuration de mesure ;
dans lequel les informations de configuration de mesure comprennent :
un paramètre de type d'un signal de référence ; et
au moins une valeur seuil d'une intensité de signal du signal de référence associée au schéma de sélection de ressource ; dans lequel l'au moins une valeur seuil est associée à un attribut de terminal, et un terminal utilisant l'au moins une valeur seuil est déterminé sur la base de l'attribut de terminal ;
dans lequel un type indiqué par le paramètre de type comprend :
un signal de référence de liaison descendante de la station de base ; et
un signal de référence d'une communication de liaison latérale entre le premier terminal et un troisième terminal ;
dans lequel l'au moins une valeur seuil comprend une première valeur seuil et une seconde valeur seuil ;
recevoir (41), par le premier terminal, les informations de configuration de mesure ; et
déterminer, par le premier terminal, le schéma de sélection de ressource du premier terminal pour mesurer la position relative entre le premier terminal et le deuxième terminal sur la base des informations de configuration de mesure ;
le procédé comprend en outre l'étape consistant à :
déterminer, par le premier terminal, le schéma de sélection de ressource sur la base d'une relation entre l'intensité de signal du signal de référence mesurée sur la base des informations de configuration de mesure et de l'au moins une valeur seuil (51) ;
dans lequel l'étape de détermination, par le premier terminal, du schéma de sélection de ressource sur la base de la relation entre l'intensité de signal du signal de référence mesurée sur la base des informations de configuration de mesure et de l'au moins une valeur seuil (51), consiste à :
en réponse au fait qu'une intensité de signal du signal de référence de liaison descendante de la station de base mesurée sur la base des informations de configuration de mesure est inférieure à la première valeur seuil et qu'une intensité de signal du signal de référence de la communication de liaison latérale entre le premier terminal et le troisième terminal est inférieure à la seconde valeur seuil, déterminer, par le premier terminal, une ressource de mesure de la position relative entre le premier terminal et le deuxième terminal à partir d'un groupe de ressources de positionnement prédéfini (61) ; ou
en réponse au fait qu'une intensité de signal du signal de référence de liaison descendante de la station de base mesurée sur la base des informations de configuration de mesure est supérieure à la première valeur seuil ou qu'une intensité de signal du signal de référence de la communication de liaison latérale entre le premier terminal et le troisième terminal est supérieure à la seconde valeur seuil, déterminer, par le premier terminal, une ressource de mesure de la position relative entre le premier terminal et le deuxième terminal programmée par la station de base sur la base d'une instruction de programmation ; ou, en réponse au fait qu'une intensité de signal du signal de référence de liaison descendante de la station de base mesurée sur la base des informations de configuration de mesure est supérieure à la première valeur seuil ou qu'une intensité de signal du signal de référence de la communication de liaison latérale entre le premier terminal et le troisième terminal est supérieure à la seconde valeur seuil, démarrer, par le premier terminal, un mécanisme de réduction de puissance et déterminer une ressource de mesure de la position relative entre le premier terminal et le deuxième terminal à partir d'un groupe de ressources de positionnement prédéfini (71) ; ou
en réponse au fait qu'une intensité de signal du signal de référence de la communication de liaison latérale entre le premier terminal et le troisième terminal mesurée sur la base des informations de configuration de mesure est inférieure à la seconde valeur seuil, déterminer, par le premier terminal, une ressource de mesure de la position relative entre le premier terminal et le deuxième terminal à partir d'un groupe de ressources de positionnement prédéfini (10) ; ou
en réponse au fait qu'une intensité de signal du signal de référence de la communication de liaison latérale entre le premier terminal et le troisième terminal mesurée sur la base des informations de configuration de mesure est supérieure à la seconde valeur seuil, déterminer, par le premier terminal, une ressource de mesure de la position relative entre le premier terminal et le deuxième terminal programmée par la station de base sur la base d'une instruction de programmation ; ou, en réponse au fait qu'une intensité de signal du signal de référence de la communication de liaison latérale entre le premier terminal et le troisième terminal mesurée sur la base des informations de configuration de mesure est supérieure à la seconde valeur seuil, démarrer, par le premier terminal, un mécanisme de réduction de puissance et déterminer une ressource de mesure de la position relative entre le premier terminal et le deuxième terminal à partir d'un groupe de ressources de positionnement prédéfini (11).

2. Procédé selon la revendication 1, dans lequel les informations de configuration de mesure comprennent en outre :
un type de mesure de l'intensité de signal du signal de référence.

3. Procédé selon la revendication 1, dans lequel l'attribut de terminal comprend : une zone de cellule au niveau de laquelle est situé le terminal et/ou un niveau de puissance de transmission d'un signal par le terminal ;
l'au moins une valeur seuil concerne des terminaux situés dans la zone de cellule et/ou l'au moins une valeur seuil concerne des terminaux qui transmettent des signaux avec le niveau de puissance.

4. Procédé selon la revendication 1, dans lequel le schéma de sélection de ressource comprend les étapes consistant à :
sélectionner de manière aléatoire une ressource dans le groupe de ressources de positionnement prédéfini en tant que premier schéma de sélection de ressource de mesure de la position relative ; ou
programmer une ressource sur la base de l'instruction de programmation en tant que second schéma de sélection de ressource de mesure de la position relative.

5. Procédé de positionnement relatif, mis en œuvre par un premier terminal, comprenant les étapes consistant à :
recevoir (41) des informations de configuration de mesure ; et
déterminer un schéma de sélection de ressource du premier terminal pour mesurer une position relative entre le premier terminal et un deuxième terminal sur la base des informations de configuration de mesure ;
dans lequel les informations de configuration de mesure comprennent :
un paramètre de type d'un signal de référence ; et
au moins une valeur seuil d'une intensité de signal du signal de référence associée au schéma de sélection de ressource ; dans lequel l'au moins une valeur seuil est associée à un attribut de terminal, et un terminal utilisant l'au moins une valeur seuil est déterminé sur la base de l'attribut de terminal ;
dans lequel un type indiqué par le paramètre de type comprend :
un signal de référence de liaison descendante d'une station de base ; et
un signal de référence d'une communication de liaison latérale entre le premier terminal et un troisième terminal ;
dans lequel l'au moins une valeur seuil comprend une première valeur seuil et une seconde valeur seuil ;
le procédé comprend en outre l'étape consistant à :
déterminer le schéma de sélection de ressource sur la base d'une relation entre l'intensité de signal du signal de référence mesurée sur la base des informations de configuration de mesure et de l'au moins une valeur seuil (51),
dans lequel l'étape de détermination du schéma de sélection de ressource sur la base de la relation entre l'intensité de signal du signal de référence mesurée sur la base des informations de configuration de mesure et de l'au moins une valeur seuil (51), consiste à :
en réponse au fait qu'une intensité de signal du signal de référence de liaison descendante de la station de base mesurée sur la base des informations de configuration de mesure est inférieure à la première valeur seuil et qu'une intensité de signal du signal de référence de la communication de liaison latérale entre le premier terminal et le troisième terminal est inférieure à la seconde valeur seuil, déterminer une ressource de mesure de la position relative entre le premier terminal et le deuxième terminal à partir d'un groupe de ressources de positionnement prédéfini (61) ; ou
en réponse au fait qu'une intensité de signal du signal de référence de liaison descendante de la station de base mesurée sur la base des informations de configuration de mesure est supérieure à la première valeur seuil ou qu'une intensité de signal du signal de référence de la communication de liaison latérale entre le premier terminal et le troisième terminal est supérieure à la seconde valeur seuil, déterminer une ressource de mesure de la position relative entre le premier terminal et le deuxième terminal programmée par la station de base sur la base d'une instruction de programmation ; ou, en réponse au fait qu'une intensité de signal du signal de référence de liaison descendante de la station de base mesurée sur la base des informations de configuration de mesure est supérieure à la première valeur seuil ou qu'une intensité de signal du signal de référence de la communication de liaison latérale entre le premier terminal et le troisième terminal est supérieure à la seconde valeur seuil, démarrer un mécanisme de réduction de puissance et déterminer une ressource de mesure de la position relative entre le premier terminal et le deuxième terminal à partir d'un groupe de ressources de positionnement prédéfini (71) ; ou
en réponse au fait qu'une intensité de signal du signal de référence de la communication de liaison latérale entre le premier terminal et le troisième terminal mesurée sur la base des informations de configuration de mesure est inférieure à la seconde valeur seuil, déterminer une ressource de mesure de la position relative entre le premier terminal et le deuxième terminal à partir d'un groupe de ressources de positionnement prédéfini (10) ; ou
en réponse au fait qu'une intensité de signal du signal de référence de la communication de liaison latérale entre le premier terminal et le troisième terminal mesurée sur la base des informations de configuration de mesure est supérieure à la seconde valeur seuil, déterminer une ressource de mesure de la position relative entre le premier terminal et le deuxième terminal programmée par la station de base sur la base d'une instruction de programmation ; ou, en réponse au fait qu'une intensité de signal du signal de référence de la communication de liaison latérale entre le premier terminal et le troisième terminal mesurée sur la base des informations de configuration de mesure est supérieure à la seconde valeur seuil, démarrer un mécanisme de réduction de puissance et déterminer une ressource de mesure de la position relative entre le premier terminal et le deuxième terminal à partir d'un groupe de ressources de positionnement prédéfini (11).

6. Procédé selon la revendication 5, dans lequel
l'attribut de terminal comprend : une zone de cellule au niveau de laquelle est situé le terminal et/ou un niveau de puissance de transmission d'un signal par le terminal ; et
l'au moins une valeur seuil concerne des terminaux situés dans la zone de cellule et/ou l'au moins une valeur seuil concerne des terminaux transmettant des signaux avec le niveau de puissance ;
le procédé comprend en outre les étapes consistant à :
déterminer l'au moins une valeur seuil correspondant à la zone de cellule au niveau de laquelle est situé le premier terminal ; ou
déterminer l'au moins une valeur seuil sur la base d'un niveau de puissance du premier terminal.

7. Dispositif de communication, comprenant :
une antenne ;
une mémoire ; et
un processeur, connecté respectivement à l'antenne et à la mémoire, et configuré pour commander un envoi et une réception de l'antenne par une exécution d'instructions exécutables par ordinateur maintenues dans la mémoire et pour mettre en œuvre le procédé selon l'une ou l'autre des revendications 5 et 6.
